# EUROPEAN PATENT APPLICATION

(11) **EP 4 618 489 A1**
(43) Date of publication of application: **17.09.2025**
(21) Application number: 22966879.3
(22) Date of filing: 30.11.2022
(51) Int. Cl.: H04L 27/00

(54) **COMMUNICATION METHOD AND COMMUNICATION APPARATUS**

(71) Applicant: Huawei Technologies Co., Ltd., Shenzhen, Guangdong 518129 (CN)
(72) Inventor: WANG, Fei, Shenzhen, Guangdong 518129 (CN); PENG, Chenghui, Shenzhen, Guangdong 518129 (CN); LU, Jiaxun, Shenzhen, Guangdong 518129 (CN); WANG, Jun, Shenzhen, Guangdong 518129 (CN); LIU, Zhe, Shenzhen, Guangdong 518129 (CN); WU, Jianjun, Shenzhen, Guangdong 518129 (CN)
(74) Representative: Isarpatent
(86) International application number: PCT/CN2022/135723
(87) International publication number: WO 2024/113288

(57) **Abstract**

This application provides a communication method and a communication apparatus. The method includes: A first node determines a collaboration node set for executing an intelligent collaboration task, where the collaboration node set includes a second node. The first node sends a first message to the second node, where the first message is used to configure the second node to execute the intelligent collaboration task, and the first message includes one or more of the following information: information about a node in the collaboration node set, identification information of the intelligent collaboration task, description information of the intelligent collaboration task, or time information for executing the intelligent collaboration task. In this way, communication efficiency can be improved.

## Description

### TECHNICAL FIELD

This application relates to the communication field, and more specifically, to a communication method and a communication apparatus.

### BACKGROUND

When being applied to a mobile communication system, an artificial intelligence (artificial intelligence, AI) technology can meet a higher communication performance requirement, implement rich service types, and be applied to more application scenarios, so that the mobile communication system can be better developed and applied.

A communication node in the mobile communication system may train an intelligent model, and apply a trained intelligent model to communication to improve communication performance. However, it is found in the research that when the AI technology is applied to the mobile communication system, an expected effect cannot be achieved due to insufficient capabilities and/or limited data diversity of the communication node.

### SUMMARY

This application provides a communication method and a communication apparatus, to improve communication efficiency.

According to a first aspect, a communication method is provided. The method may be performed by a communication device or a module (for example, a chip) disposed in (or used for) the communication device. The following uses an example in which the method is performed by a first node in a communication system for description.

The method includes: The first node determines a collaboration node set for executing an intelligent collaboration task, where the collaboration node set includes a second node. The first node sends a first message to the second node, where the first message is used to configure the second node to execute the intelligent collaboration task, and the first message includes one or more of the following information:
information about a node in the collaboration node set;
identification information of the intelligent collaboration task;
description information of the intelligent collaboration task; or
time information for executing the intelligent collaboration task.

According to the foregoing solution, the first node has an intelligent collaboration task configuration function, and the first node can organize and configure a plurality of nodes to execute the intelligent collaboration task in collaboration, so that the plurality of nodes can complete the intelligent collaboration task in collaboration based on a configuration of the first node, and resource sharing between the plurality of nodes, for example, sharing of a processing capability to execute an AI technology and/or sharing of data samples, can be implemented. In this way, when the artificial intelligence technology is applied to communication, an expected effect of improving communication efficiency can be achieved, and efficiency of executing an intelligent task and resource utilization can be improved.

With reference to the first aspect, in some implementations of the first aspect, the description information of the intelligent collaboration task indicates one or more of the following:
a topology structure between nodes in the collaboration node set;
a type of an interaction parameter between nodes in the collaboration node set;
a format of an interaction parameter;
an interaction manner of an interaction parameter;
whether an interaction parameter is synchronously sent between nodes in the collaboration node set;
a model used by the intelligent collaboration task; or
a model training manner of the intelligent collaboration task.

In an optional implementation, the interaction parameter includes one or more of the following:
a model parameter, a gradient, an environment state parameter, an action execution parameter, an action execution policy parameter, a reward parameter, a knowledge extraction representation parameter, or a correlation between node tasks.

According to the foregoing solution, the first node may configure the collaboration nodes to complete the intelligent collaboration task in collaboration with each other, so that a problem that performance of a model obtained through training does not meet a requirement due to insufficient diversity of data samples of a single node and other problems can be reduced. In addition, the description information of the intelligent collaboration task in the first message is defined, so that the first node and the nodes in the collaboration node set can reach a consensus on content indicated by the description information. In this way, the first node flexibly configures different types of intelligent collaboration tasks for the nodes based on a task requirement, and the collaboration node set can implement different types of tasks in collaboration.

With reference to the first aspect, in some implementations of the first aspect, the method further includes: The first node determines, based on a load state of a node in the collaboration node set, time for executing the intelligent collaboration task, where the time information indicates the time for executing the intelligent collaboration task.

According to the foregoing solution, the first node may determine, based on the load state of the node in the collaboration node set and communication traffic and processing overheads of the to-be-configured intelligent collaboration task of the first node, whether each node currently has a spare capability to execute the to-be-configured intelligent collaboration task, and impact of executing the to-be-configured intelligent collaboration task by each node on a communication service. When impact of executing the intelligent collaboration task by the collaboration node set on service communication of the node is small (for example, one or more of the parameters for determining the load state are less than a corresponding threshold), it is determined that the collaboration node set is configured to execute the intelligent collaboration task, that is, the time for executing the intelligent collaboration task by the collaboration node set is determined. This can reduce impact on service communication caused by executing an intelligent collaboration task by a node, and reduce cases in which data congestion is caused by executing the intelligent collaboration task by the node.

With reference to the first aspect, in some implementations of the first aspect, the method further includes: The first node determines, based on the load state of the node in the collaboration node set, to stop the intelligent collaboration task.

Optionally, the first node sends a second message to the node in the collaboration node set, where the second message indicates to stop the intelligent collaboration task.

For example, the stopping the intelligent collaboration task may be suspending the intelligent collaboration task, terminating the intelligent collaboration task, or stopping the intelligent collaboration task after the intelligent collaboration task is completed.

According to the foregoing solution, the first node may stop the intelligent collaboration task in time based on the load state of the node in the collaboration node set. This can reduce impact on service communication caused by executing an intelligent collaboration task by a node, and reduce cases in which data congestion is caused by executing the intelligent collaboration task by the node.

In an implementation, the first node receives a third message from the second node, where the third message indicates a load state of the second node.

In another implementation, the first node may obtain the load state of the node in the collaboration node set from a network state management node. For example, the network state management node may obtain a state of a node in a network, where the state includes a load state, and the network state management node may provide the first node with the load state of the node in the collaboration node set.

According to the foregoing solution, the first node may obtain the load state of the node in the collaboration node set, so that the first node can monitor collaboration performance of the collaboration node, and the intelligent collaboration task can be adjusted in time.

With reference to the first aspect, in some implementations of the first aspect, the load state is determined based on one or more of the following parameters:
a percentage of input communication traffic of a collaboration task of a node in total input traffic;
a percentage of output communication traffic of a collaboration task of a node in total output traffic;
a percentage of computing power overheads of a node for executing a collaboration task in total computing power overheads; or
a percentage of communication traffic transmission duration of a collaboration task of a node in total session data congestion duration in a case of session data congestion.

With reference to the first aspect, in some implementations of the first aspect, the method further includes: The first node receives a fourth message from a third node, where the fourth message is used to request to configure the intelligent collaboration task.

For example, the third node may be an AF node, an NF node, a node in a collaboration node set, or an upper-layer control node of the first node.

According to the foregoing solution, the first node may organize and configure, based on a request of a node in a network as required, the collaboration node set to execute the intelligent collaboration task in collaboration, so that efficiency of executing an intelligent task by the node and resource utilization can be improved. In this way, communication efficiency of an artificial intelligence application in communication is improved.

With reference to the first aspect, in some implementations of the first aspect, the collaboration node set includes the first node, and the method further includes: The first node sends a fifth message to a fourth node, where the fifth message is used to request to authorize the intelligent collaboration task. Correspondingly, the first node receives a sixth message from the fourth node, where the sixth message is used to authorize execution of the intelligent collaboration task.

According to the foregoing solution, the fourth node may be a control node or a management node of the intelligent collaboration task. When the first node needs to organize and configure the intelligent collaboration task, the first node needs to be authorized by the fourth node, so that the control node monitors the intelligent collaboration task and collaboration performance of the collaboration node. In this way, the intelligent collaboration task is performed in order in a network, reducing impact on service communication.

With reference to the first aspect, in some implementations of the first aspect, the method further includes: The first node sends a seventh message to the fourth node, where the seventh message is used to request to deregister the intelligent collaboration task.

With reference to the first aspect, in some implementations of the first aspect, that the first node determines the collaboration node set for executing the intelligent collaboration task includes: The first node receives eighth messages from a plurality of nodes, where the eighth message indicates a capability of a node to execute the intelligent task, and the plurality of nodes include the second node. The first node determines the collaboration node set based on capabilities of the plurality of nodes to execute the intelligent task, where the collaboration node set includes at least one of the plurality of nodes.

According to the foregoing solution, the first node may obtain the capabilities of the plurality of nodes to execute the intelligent task, and determine, based on a node capability and a task requirement of the intelligent collaboration task, a node whose capability can meet the task requirement of the intelligent collaboration task to execute the intelligent collaboration task. Cases in which performance of an intelligent collaboration task cannot meet a requirement because a node capability does not meet a task requirement are reduced, and a resource waste can be reduced and resource utilization can be improved.

With reference to the first aspect, in some implementations of the first aspect, the eighth message includes one or more of the following information:
description information of a current intelligent task, description information of a historical intelligent task, local model information, supported model training manner information, or information indicating whether model aggregation is supported.

With reference to the first aspect, in some implementations of the first aspect, that the first node receives the eighth messages from the plurality of nodes includes: The first node sends a ninth message to the second node, where the ninth message indicates the second node to report the capability to execute the intelligent task. The first node receives the eighth message from the second node.

According to the foregoing solution, the node may actively report the node capability to the first node, or the first node may actively query, by using the ninth message, the capability of the node to execute the intelligent collaboration task, so that the first node can obtain the node capability, and determine, based on the node capability, a node that meets a task requirement to execute the intelligent collaboration task.

According to a second aspect, a communication method is provided. The method may be performed by a communication device or a module (for example, a chip) disposed in (or used for) the communication device. The following uses an example in which the method is performed by a second node in a communication system for description.

The method includes: The second node receives a first message from a first node, where the first message is used to configure the second node to execute an intelligent collaboration task, and a collaboration node set includes the second node. The second node executes the intelligent collaboration task based on the first message. The first message includes one or more of the following information:
information about a node in the collaboration node set;
identification information of the intelligent collaboration task;
description information of the intelligent collaboration task; or
time information for executing the intelligent collaboration task.

With reference to the second aspect, in some implementations of the second aspect, the description information of the intelligent collaboration task indicates one or more of the following:
a topology structure between nodes in the collaboration node set;
a type of an interaction parameter between nodes in the collaboration node set;
a format of an interaction parameter;
an interaction manner of an interaction parameter;
whether an interaction parameter is synchronously sent between nodes in the collaboration node set;
a model used by the intelligent collaboration task; or
a model training manner of the intelligent collaboration task.

With reference to the second aspect, in some implementations of the second aspect, the interaction parameter includes one or more of the following:
a model parameter, a gradient, an environment state parameter, an action execution parameter, a reward parameter, a knowledge extraction representation parameter, or a correlation between node tasks.

With reference to the second aspect, in some implementations of the second aspect, the method further includes: The second node receives a second message from the first node, where the second message indicates to stop the intelligent collaboration task.

With reference to the second aspect, in some implementations of the second aspect, the method further includes: The second node sends a third message to the first node, where the third message indicates a load state of the second node.

With reference to the second aspect, in some implementations of the second aspect, the load state is determined based on one or more of the following parameters:
a percentage of input communication traffic of a collaboration task of a node in total input traffic;
a percentage of output communication traffic of a collaboration task of a node in total output traffic;
a percentage of computing power overheads of a node for executing a collaboration task in total computing power overheads; or
a percentage of duration in which a node transmits communication information of a collaboration task in total session data congestion duration in a case of session data congestion.

With reference to the second aspect, in some implementations of the second aspect, the method further includes: The second node sends an eighth message to the first node, where the eighth message indicates a capability of a node to execute the intelligent task, and a plurality of nodes include the second node.

With reference to the second aspect, in some implementations of the second aspect, the eighth message includes one or more of the following information:
description information of a current intelligent task, description information of a historical intelligent task, local model information, supported model training manner information, or information indicating whether model aggregation is supported.

With reference to the second aspect, in some implementations of the second aspect, that the second node sends the eighth message to the first node includes: The second node receives a ninth message sent by the first node, where the ninth message indicates the second node to report the capability to execute the intelligent task. The second node sends the eighth message to the first node.

With reference to the second aspect, in some implementations of the second aspect, the method further includes: The second node communicates with the node in the collaboration node set by using an intelligent model; and/or the second node sends a model parameter of an intelligent model. The intelligent model is obtained by executing the intelligent collaboration task.

It should be noted that, for a plurality of messages described above, for example, the first message to the ninth message, when there is no logic conflict, a same message/same signaling may include functions of the plurality of messages. For example, the eighth message that is sent by the second node to the first node and that indicates the capability of the node to execute the intelligent task and the third message that indicates the load state of the node may be different messages or may be a same message. For example, a message sent by the second node to the first node not only indicates a capability of the second node to execute the intelligent task, but also indicates the load state of the second node. A manner of transferring a message between nodes is not limited in embodiments of this application. Different information included in one message may be sent by one node to a receiving node at one time, or different information in the message may be sent by the node to the receiving node at a plurality of times. For example, the first node may first send, to the second node, the identification information of the first intelligent collaboration task in the first message, and then send, to the second node, the description information of the first intelligent collaboration task. This is not limited in this application.

According to a third aspect, a communication apparatus is provided. In a design, the communication apparatus has an intelligent collaboration task configuration function and/or an intelligent collaboration task optimization function, where the intelligent collaboration task configuration function is used to configure one or more of a collaboration node set for executing an intelligent collaboration task, a collaboration manner of a collaboration node set, interaction information between collaboration nodes, or an occasion for executing an intelligent collaboration task. The communication apparatus includes modules that one-to-one correspond to methods/operations/steps/actions described in the first aspect. The modules may be implemented by a hardware circuit, software, or a combination of a hardware circuit and software.

Optionally, the communication apparatus has an intelligent collaboration task management function. The intelligent collaboration task management function is used for one or more of registration, creation, allocation, update, or deletion of the intelligent collaboration task.

In a design, the apparatus includes: a processing unit, configured to determine a collaboration node set for executing an intelligent collaboration task, where the collaboration node set includes a second node; and a transceiver unit, configured to send a first message to the second node, where the first message is used to configure the second node to execute the intelligent collaboration task.

Definitions of the message and the information in the third aspect are the same as definitions of a corresponding message and corresponding information in the first aspect. For implementation, refer to the first aspect. For brevity, details are not described herein again.

With reference to the third aspect, in some implementations of the third aspect, the processing unit is further configured to determine, based on a load state of a node in the collaboration node set, time for executing the intelligent collaboration task, where the time information indicates the time for executing the intelligent collaboration task.

With reference to the third aspect, in some implementations of the third aspect, the processing unit is further configured to determine, based on the load state of the node in the collaboration node set, to stop the intelligent collaboration task. The transceiver unit is further configured to send a second message to the node in the collaboration node set, where the second message indicates to stop the intelligent collaboration task.

With reference to the third aspect, in some implementations of the third aspect, the transceiver unit is further configured to receive a third message from the second node, where the third message indicates a load state of the second node.

With reference to the third aspect, in some implementations of the third aspect, the transceiver unit is further configured to receive a fourth message from a third node, where the fourth message is used to request to configure the intelligent collaboration task.

With reference to the third aspect, in some implementations of the third aspect, the collaboration node set includes the communication apparatus. The transceiver unit is further configured to send a fifth message to a fourth node, where the fifth message is used to request to authorize the intelligent collaboration task; and receive a sixth message from the fourth node, where the sixth message is used to authorize execution of the intelligent collaboration task.

With reference to the third aspect, in some implementations of the third aspect, the transceiver unit is further configured to send a seventh message to the fourth node, where the seventh message is used to request to deregister the intelligent collaboration task.

With reference to the third aspect, in some implementations of the third aspect, the transceiver unit is further configured to receive eighth messages from a plurality of nodes, where the eighth message indicates a capability of a node to execute the intelligent task, and a plurality of nodes include the second node. The processing unit is further configured to determine the collaboration node set based on capabilities of the plurality of nodes to execute the intelligent task, where the collaboration node set includes at least one of the plurality of nodes.

With reference to the third aspect, in some implementations of the third aspect, the transceiver unit is further configured to: send a ninth message to the second node, where the ninth message indicates the second node to report the capability to execute the intelligent task; and receive the eighth message from the second node.

According to a fourth aspect, a communication apparatus is provided. In a design, the communication apparatus has a function of executing an intelligent collaboration task. The apparatus may include modules that are in one-to-one correspondence with the methods/operations/steps/actions described in the second aspect. The modules may be implemented through a hardware circuit, software, or a combination of a hardware circuit and software.

In a design, the apparatus includes: a transceiver unit, configured to receive a first message from a first node, where the first message is used to configure a second node to execute an intelligent collaboration task, and a collaboration node set includes the second node; and a processing unit, configured to execute the intelligent collaboration task based on the first message.

Definitions of the message and the information in the fourth aspect are the same as definitions of a corresponding message and corresponding information in the second aspect. For implementation, refer to the second aspect. For brevity, details are not described herein again.

With reference to the fourth aspect, in some implementations of the fourth aspect, the transceiver unit is further configured to receive a second message from the first node, where the second message indicates to stop the intelligent collaboration task.

With reference to the fourth aspect, in some implementations of the fourth aspect, the transceiver unit is further configured to send a third message to the first node, where the third message indicates a load state of the second node.

With reference to the fourth aspect, in some implementations of the fourth aspect, the transceiver unit is further configured to send an eighth message to the first node, where the eighth message indicates a capability of a node to execute the intelligent task, and a plurality of nodes include the second node.

With reference to the fourth aspect, in some implementations of the fourth aspect, the transceiver unit is specifically configured to: receive a ninth message sent by the first node, where the ninth message indicates the second node to report the capability to execute the intelligent task; and send the eighth message to the first node.

With reference to the fourth aspect, in some implementations of the fourth aspect, the processing unit is further configured to communicate with the node in the collaboration node set by using an intelligent model; and/or the transceiver unit is further configured to send a model parameter of an intelligent model. The intelligent model is obtained by executing the intelligent collaboration task.

According to a fifth aspect, a communication apparatus is provided, and includes a processor. The processor may implement the method in any possible implementation of the first aspect or the method in any possible implementation of the second aspect. Optionally, the communication apparatus further includes a memory. The processor is coupled to the memory, and may be configured to execute instructions in the memory, to implement the method in any possible implementation of the first aspect or the method in any possible implementation of the second aspect.

Optionally, the processor and the memory are integrated together.

Optionally, the communication apparatus further includes a communication interface, and the processor is coupled to the communication interface. In embodiments of this application, the communication interface may be a transceiver, a pin, a circuit, a bus, a module, or a communication interface of another type. This is not limited.

In an implementation, the communication apparatus is a communication device. When the communication apparatus is a communication device (for example, a terminal device or a network device), the communication interface may be a transceiver or an input/output interface.

In another implementation, the communication apparatus is a chip disposed in the communication device. When the communication apparatus is the chip disposed in the communication device, the communication interface may be an input/output interface.

Optionally, the transceiver may be a transceiver circuit. Optionally, the input/output interface may be an input/output circuit.

According to a sixth aspect, a processor is provided, including an input circuit, an output circuit, and a processing circuit. The processing circuit is configured to receive a signal through the input circuit, and transmit a signal through the output circuit, to enable the processor to perform the method in any possible implementation of the first aspect or the method in any possible implementation of the second aspect.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to a seventh aspect, a computer program product is provided. The computer program product includes a computer program (which may also be referred to as code or instructions). When the computer program is run, a computer is enabled to perform the method in any possible implementation of the first aspect or the method in any possible implementation of the second aspect.

According to an eighth aspect, a computer-readable storage medium is provided. The computer-readable storage medium stores a computer program (which may also be referred to as code or instructions). When the computer program is run on a computer, the computer is enabled to perform the method in any possible implementation of the first aspect or the method in any possible implementation of the second aspect.

In some implementations of the eighth aspect, the computer may be the foregoing communication device (for example, a terminal device or a network device).

According to a ninth aspect, a communication system is provided, including the foregoing at least one first node and at least one second node.

### BRIEF DESCRIPTION OF DRAWINGS

FIG. 1 is a diagram of a system architecture of a communication system to which an embodiment of this application is applicable;
FIG. 2 is a schematic flowchart of a communication method according to an embodiment of this application;
FIG. 3 is another schematic flowchart of a communication method according to an embodiment of this application;
FIG. 3a and FIG. 3b are diagrams of a node architecture according to embodiments of this application;
FIG. 4 is another schematic flowchart of a communication method according to an embodiment of this application;
FIG. 4a is another diagram of a node architecture according to an embodiment of this application;
FIG. 5 is another schematic flowchart of a communication method according to an embodiment of this application;
FIG. 6 is another diagram of a system architecture according to an embodiment of this application;
FIG. 7 is a diagram of a structure of a communication apparatus according to an embodiment of this application; and
FIG. 8 is another diagram of a structure of a communication apparatus according to an embodiment of this application.

### DESCRIPTION OF EMBODIMENTS

In embodiments of this application, "at least one (item)" may also be described as "one (item) or more (items)", and "a plurality of (items)" may be two (items), three (items), four (items), or more (items). This is not limited. "/" may represent an "or" relationship between associated objects. For example, A/B may represent A or B. In addition, "and/or" may indicate that there are three relationships between associated objects. For example, A and/or B may represent the following three cases: Only A exists, both A and B exist, and only B exists, where A and B may be singular or plural. For ease of description of the technical solutions in embodiments of this application, a word like "first", "second", "A", or "B" may be used to distinguish between technical features with a same or similar function. The word like "first", "second", "A", or "B" does not limit a quantity and an execution sequence. In addition, the word like "first", "second", "A", or "B" does not limit a definite difference. A term like "example" or "for example" represents an example, an illustration, or a description. Any design scheme described as "example" or "for example" should not be explained as being more preferred or having more advantages than another design scheme. The term like "example" or "for example" is used to present a related concept in a specific manner for ease of understanding.

The technical solutions in embodiments of this application may be applied to various communication systems, for example, a long term evolution (long term evolution, LTE) system (for example, an LTE frequency division duplex (frequency division duplex, FDD) system or an LTE time division duplex (time division duplex, TDD) system), a universal mobile telecommunications system (universal mobile telecommunications system, UMTS), or a 5th generation (5th generation, 5G) communication system, and a communication method provided in this application may be further applied to a communication system (for example, a 6th generation (6th generation, 6G) communication system) in a future evolved public land mobile communication network (public land mobile network, PLMN), another communication system, or the like. This is not limited in this application.

The following describes the technical solutions in embodiments of this application with reference to the accompanying drawings.

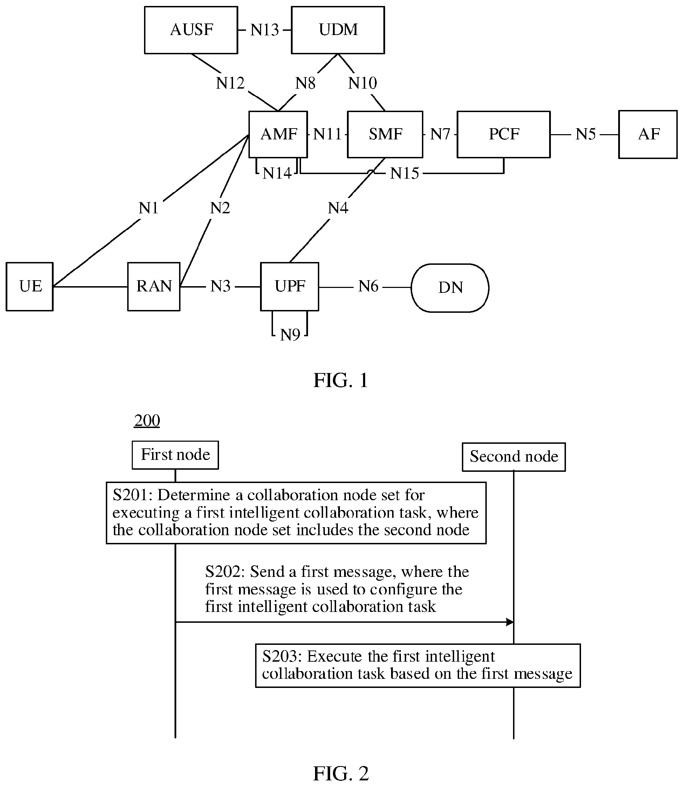

FIG. 1 is a diagram of an architecture 100 of a communication system to which an embodiment of this application is applicable. The system architecture 100 includes user equipment (user equipment, UE), an access network, and a core network. The access network includes one or more access network devices, for example, a radio access network (radio access network, RAN) device shown in FIG. 1.

Nodes in the core network include an authentication server function (authentication server function, AUSF) node, a policy control function (policy control function, PCF) node, a unified data management (unified data management, UDM) node, a unified data repository (unified data repository, UDR) node, a network repository function (network repository function, NRF) node, an application function (application function, AF) node, an access and mobility management function (access and mobility management function, AMF) node, a session management function (session management function, SMF) node, a RAN node, a UPF node, and the like that are shown in FIG. 1.

The following describes functions of each core network node. The AUSF node is mainly responsible for performing authentication of a user, to determine whether to allow the user or a device to access a network. The PCF node is mainly responsible for managing a charging policy and a QoS policy. The UDM node is mainly responsible for functions such as subscription data management and user access authorization. The UDR node is mainly responsible for functions of storage and access of subscription data, policy data, application data, and other types of data. The NRF node may be configured to: provide a node discovery function, and provide, based on a request of another node, node information corresponding to a node type. The NRF node further provides node management services, for example, node registration, update, and deregistration, and node state subscription and push. The AF node mainly transfers requirements of an application side on a network side. The AMF node mainly performs functions such as mobility management and access authentication/authorization. In addition, the AMF node is further responsible for transferring a user policy between the UE and the PCF node. The SMF node is mainly responsible for completing session management functions such as internet protocol (internet protocol, IP) address allocation, UPF node selection, and charging and quality of service (quality of service, QoS) policy control for the UE. The UPF node serves as an interface UPF for a data network (data network, DN) and is mainly responsible for functions such as user plane data forwarding, session/flow-level charging statistics, and bandwidth limiting.

In addition, in addition to the core network node shown in FIG. 1, the core network may further include a network data analytics function (network data analytics function, NWDAF) node. The NWDAF node may provide a network analytics service based on request data of a network service. For example, the NWDAF node may perform data collection and data analytics in a network. The core network may further include a network repository function (network repository function, NRF) node. The NRF node may be responsible for network function service registration, state monitoring, and the like, to implement automatic management, selection, and extension of the network function service, and allow each network function to discover a service provided by another network function.

As shown in FIG. 1, functional units may communicate with each other through a next generation network (next generation, NG) interface. For example, the UE may transmit a control plane message with the AMF node through an NG interface 1 (N1 for short), the RAN node may establish a user plane data transmission channel with the UPF through an NG interface 3 (N3 for short), the RAN node may establish a control plane signaling connection to the AMF node through an NG interface 2 (N2 for short), the UPF may exchange information with the SMF node through an NG interface 4 (N4 for short), the UPF may exchange user plane data with the data network DN through an NG interface 6 (N6 for short), the AMF node may exchange information with the SMF node through an NG interface 11 (N11 for short), the SMF node may exchange information with the PCF node through an NG interface 7 (N7 for short), and the AMF node may exchange information with the AUSF through an NG interface 12 (N12 for short). It should be noted that FIG. 1 is merely an example architectural diagram, and in addition to the functional units shown in FIG. 1, the network architecture may further include other functional units.

The system architecture may further include a server (cloud). The server may provide a device that provides a computing or application service for a service that requires integrity transmission, including a plurality of devices such as a control server and an application server.

The access network device may be a base station (base station), a NodeB (NodeB), an evolved NodeB (evolved NodeB, eNodeB or eNB), a transmission reception point (transmission reception point, TRP), a next generation NodeB (next generation NodeB, gNB) in a 5th generation (5th generation, 5G) mobile communication system, an access network device in an open radio access network (open radio access network, O-RAN or open RAN), a next generation base station in a 6th generation (6th generation, 6G) mobile communication system, a base station in a future mobile communication system, an access node in a wireless fidelity (wireless fidelity, Wi-Fi) system, or the like. Alternatively, the access network device may be a module or unit that implements some functions of the base station, for example, may be a central unit (central unit, CU), a distributed unit (distributed unit, DU), a central unit control plane (CU control plane, CU-CP) module, or a central unit user plane (CU user plane, CU-UP) module. The access network device may be a macro base station (for example, 110a in FIG. 1), may be a micro base station or an indoor base station (for example, 110b in FIG. 1), or may be a relay node, a donor node, or the like. A specific technology and a specific device form that are used by the access network device are not limited in embodiments of this application. The 5G system may also be referred to as a new radio (new radio, NR) system. An access network node in embodiments of this application may be the access network device, or may be a module or unit disposed in the access network device.

In embodiments of this application, an apparatus configured to implement a function of the access network device may be an access network device, or may be an apparatus that can support the access network device in implementing the function, for example, a chip system, a hardware circuit, a software module, or a combination of the hardware circuit and the software module. The apparatus may be installed in the access network device or may be used together with the access network device. In embodiments of this application, the chip system may include a chip, or may include a chip and another discrete component.

The terminal may also be referred to as a terminal device, user equipment (user equipment, UE), a mobile station, a mobile terminal, or the like. The terminal may be widely used in various scenarios for communication. For example, the scenario includes but is not limited to at least one of the following scenarios: enhanced mobile broadband (enhanced mobile broadband, eMBB), ultra-reliable low-latency communication (ultra-reliable low-latency communication, URLLC), massive machine-type communications (massive machine-type communications, mMTC), device-to-device (device-to-device, D2D) communication, vehicle to everything (vehicle to everything, V2X) communication, machine-type communication (machine-type communication, MTC), an internet of things (internet of things, IoT), virtual reality, augmented reality, industrial control, autonomous driving, telemedicine, a smart grid, smart furniture, smart office, smart wearable, smart transportation, a smart city, or the like. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A specific technology and a specific device form that are used by the terminal are not limited in embodiments of this application.

In embodiments of this application, an apparatus configured to implement a function of the terminal may be a terminal; or may be an apparatus that can support the terminal in implementing the function, for example, a chip system, a hardware circuit, a software module, or a combination of the hardware circuit and the software module. The apparatus may be installed in the terminal or may be used together with the terminal.

Due to insufficient capabilities and/or limited data diversity of a communication node, an AI technology may fail to achieve an expected effect when applied to a wireless communication system. For example, due to a low data processing capability of the communication node and/or insufficient diversity of data samples of the communication node, an effect of applying, to actual inference, an intelligent model obtained by performing model training by the communication node is poor. To resolve the foregoing problem, embodiments of this application provide that a first node with an intelligent collaboration task configuration function may be used to organize and configure a plurality of nodes to execute an intelligent collaboration task in collaboration, so that resource sharing between the plurality of nodes, for example, sharing of a processing capability to execute an AI technology and/or sharing of data samples, can be implemented. In this way, when the AI technology is applied to communication, an expected effect of improving communication efficiency can be achieved, and efficiency of executing an intelligent task and resource utilization can be improved.

FIG. 2 is a schematic flowchart of a communication method 200 according to an embodiment of this application. In the embodiment shown in FIG. 2, a first node may have, but is not limited to, an intelligent collaboration task configuration function and/or an intelligent collaboration task optimization function. The intelligent collaboration task configuration function is used to configure an intelligent collaboration task, including but not limited to: after one or more of a collaboration node set, a collaboration manner of the collaboration node set, and an occasion for executing the intelligent collaboration task are determined, configuring each node in the collaboration node set, so that the node in the collaboration node set executes the intelligent collaboration task. The intelligent collaboration task optimization function includes but is not limited to optimizing an intelligent collaboration task configuration based on a network state. A second node may have, but is not limited to, a function of executing an intelligent collaboration task, and the second node may be referred to as a collaboration node. The communication method 200 includes but is not limited to the following steps.

S201: The first node determines a collaboration node set for executing a first intelligent collaboration task, where the collaboration node set includes the second node.

In an implementation, the collaboration node set further includes the first node, that is, the first node is a collaboration node in the collaboration node set.

In other words, the first node may be both an organization node of the intelligent collaboration task and a node participating in execution of the intelligent collaboration task. For example, when the first node needs to complete the first intelligent collaboration task in collaboration with another node, the first node may determine the collaboration node set based on a task requirement of the first intelligent collaboration task.

For example, if the first node detects that inference performance of a currently used intelligent model does not meet a requirement, and needs to perform model training jointly with another node, the first intelligent collaboration task may be joint model training of a plurality of nodes, and the first node may determine the collaboration node set, where the collaboration node set may include the first node and one or more adjacent nodes of the first node. For example, the adjacent node of the first node may be a communication reachable node of the first node, that is, a node that can exchange information with the first node. For example, the adjacent node of the first node includes a node that has established a communication interface with the first node and/or a node that implements information exchange with the first node by forwarding information about one or more nodes. This is not limited in this application.

Alternatively, the first node may organize and participate in the first intelligent collaboration task after receiving a request message that is from a task request node and that is used to request the first intelligent collaboration task. Optionally, the request message may include the task requirement of the first intelligent collaboration task. The task request node may be a node in the collaboration node set. For example, the task request node may be a node that does not have a capability to organize the intelligent collaboration task. Alternatively, the task request node may be a node outside the collaboration node set. For example, the task request node may be an AF node, and the AF node requests, based on an application requirement, the first node to configure the first intelligent collaboration task.

In another implementation, the collaboration node set does not include the first node, and the first node is a control node of the intelligent collaboration task, or is referred to as a management node.

The first node determines, based on the task requirement of the first intelligent collaboration task, the collaboration node set for executing the first intelligent collaboration task. For example, after receiving the request message that is from the task request node and that is used to request the first intelligent collaboration task, the first node may determine the collaboration node set based on the task requirement of the first intelligent collaboration task. Optionally, the request message may include the task requirement of the first intelligent collaboration task. The task request node may be a node in a collaboration node set, or may not be a node in the collaboration node set. This is not limited in this application.

In an implementation, the first node may determine, based on the task requirement of the first intelligent collaboration task and a capability of a node to execute the intelligent task, the collaboration node set for executing the first intelligent collaboration task, where the capability of the node in the collaboration node set to execute the intelligent task can meet the task requirement of the first intelligent collaboration task.

The first node may receive eighth messages from the plurality of nodes, where the eighth message indicates the capability of the node to execute the intelligent task. The first node determines the collaboration node set based on capabilities of the plurality of nodes to execute the intelligent task, where the collaboration node set includes at least one of the plurality of nodes.

The plurality of nodes are nodes having the capabilities to execute the intelligent task, and may be referred to as candidate collaboration nodes. For example, the node having the capability to execute the intelligent task may send the eighth message to the first node, to notify the first node of the capability to execute the intelligent task. The first node uses the nodes obtaining the capabilities to execute the intelligent task as the candidate collaboration nodes. When a collaboration node for executing the first intelligent collaboration task needs to be allocated to the first intelligent collaboration task, the first node may determine, in the candidate collaboration nodes, the plurality of collaboration nodes for executing the first intelligent collaboration task, that is, the collaboration node set. For example, after receiving the request message from the task request node, the first node determines, based on the capability of the candidate collaboration node to execute the intelligent task, a node whose capability meets the task requirement of the first intelligent collaboration task as the collaboration node.

Each node may autonomously send the eighth message to the first node, to notify the node of the capability to execute the intelligent task. Alternatively, the first node may send a ninth message to the plurality of nodes, where the ninth message indicates the second node to report the capability to execute the intelligent task. When receiving the ninth message, the plurality of nodes send the eighth messages to the first node. To be specific, the first node may actively query, by using the ninth message, the capability of the node to execute the intelligent task, so that the node sends the eighth message to the first node after receiving the ninth message. In this way, the first node can obtain the capability of the node to execute the intelligent task.

For example, the eighth message may be referred to as a capability reporting message, and the ninth message may be referred to as a capability query message or a capability request message.

The eighth message may include but is not limited to one or more of the following information of the node:
description information of a current intelligent task, description information of a historical intelligent task, local model information, supported model training manner information, or information indicating whether model aggregation is supported.

The description information of the intelligent task (for example, the description information of the current intelligent task and/or the description information of the historical intelligent task) may indicate a type of the intelligent task of the node. For example, the type of the intelligent task may be a training task or an inference task of an intelligent model. When the type of the intelligent task is the training task of the intelligent model, the description information of the intelligent task may further include one or more of a loss function, a model optimization algorithm, or an initialized model used by the training task. When the type of the intelligent task is the inference task, the description information of the intelligent task may further indicate one or more of an intelligent model, an input parameter type, or an output parameter type used for inference. The first node may determine, based on the description information of the current intelligent task and/or the description information of the historical intelligent task that are/is reported by the node, the first intelligent collaboration task that can be supported by the node. It should be noted that the current intelligent task or the historical intelligent task may be an intelligent task independently completed by the node, or may be an intelligent collaboration task completed in collaboration with another node.

The eighth message may include local model information of the node, and the local model information indicates a locally existing model of the node, so that the first node can determine whether the existing intelligent model of the node meets a requirement for executing the first intelligent collaboration task, and further determine whether the node supports execution of the first intelligent collaboration task. The local model information may include an identifier of the existing intelligent model of the node. Alternatively, a model parameter of the locally existing model may be included, and the first node may determine the intelligent model of the node based on the model parameter. This is not limited in this application.

The eighth message may include information about a supported model training manner, and the information about the model training manner may indicate that the node supports one or more of model training manners such as supervised learning, unsupervised learning, or reinforcement learning. The first node may determine, based on the model training manner supported by the node, whether a model training manner required by the first intelligent collaboration task is met, to determine whether the node supports execution of the first intelligent collaboration task. For example, identifiers of a plurality of model training manners may be predefined, and the eighth message may include an identifier of the model training manner supported by the node.

The eighth message may include information indicating whether the node supports model aggregation. The first node may determine, depending on whether the node supports model aggregation and whether the first intelligent collaboration task requires the node to support model aggregation, the node for executing the first intelligent collaboration task. For example, if the first intelligent collaboration task requires the node to support model aggregation, the first node selects a node that supports model aggregation to execute the first intelligent collaboration task. If the first intelligent collaboration task does not require the node to support model aggregation, the first node does not need to consider whether the node supports model aggregation when determining the collaboration node set.

S202: The first node sends a first message to the second node, where the first message is used to configure the second node to execute the intelligent collaboration task.

After determining the collaboration node set for executing the intelligent collaboration task, the first node may send, to a node in the collaboration node set, a configuration message used to configure the node to execute the intelligent collaboration task, so that the node in the collaboration node set can execute the intelligent collaboration task based on the configuration message. If the configuration message sent by the first node to the second node is the first message, correspondingly, the second node receives the first message from the first node. The configuration message sent by the first node to another node in the collaboration node set may be implemented with reference to the first message. Details are not described herein again.

The first message may include but is not limited to one or more of the following information:
information about a node in the collaboration node set, identification information of the first intelligent collaboration task, description information of the first intelligent collaboration task, or time information for executing the first intelligent collaboration task.

The information about the node in the collaboration node set may include an identifier of at least one node in the collaboration node set. In an example, the information about the node may include an identifier of a collaboration node that needs to exchange information with the second node and that is in the collaboration node set when the first intelligent collaboration task is executed, and the second node may determine, based on the information about the node, the collaboration node that exchanges information with the second node. Optionally, the information about the node further includes an identifier of a collaboration node that does not interact with the second node and that is in the collaboration node set, that is, the information about the node includes an identifier of each node in the collaboration node set, and the second node may determine each collaboration node that participates in execution of the first intelligent collaboration task. This is not limited in this application.

The first message may include the description information of the first intelligent collaboration task, and the description information of the first intelligent collaboration task may indicate one or more configuration parameters in 1 to 7 below.

### 1. Topology structure between nodes in the collaboration node set

For example, the description information may indicate a type of a topology structure of the first intelligent collaboration task. For example, the topology structure may be of a type of point-to-point (point-to-point, P2P), centralized (centralized), or de-centralized (de-centralized). For example, an identifier of each type of topology structure may be predefined, and the description information includes the identifier of the type of the topology structure.

The centralized topology structure type means that the collaboration node set includes a central node and a plurality of distributed nodes. The distributed node sends a result (an intermediate result or a final result) obtained by executing the intelligent collaboration task to the central node, and the central node collects the result obtained from the distributed node, and executes a task that is undertaken by the central node in the intelligent collaboration task. For example, the intelligent collaboration task may be federated learning. After performing at least one iteration of model training based on local data, each distributed node sends an obtained gradient and/or model parameter to the central node. After combining training results of the plurality of distributed nodes, the central node obtains an updated model parameter of current training, and notifies each distributed node. The distributed node performs a next iteration of model training based on the updated model parameter. However, this application is not limited thereto. A centralized intelligent collaboration task may alternatively be an intelligent inference task or another model training task in which a central node exists.

The de-centralized topology structure type means that no central node exists in the collaboration node set, and the nodes may perform, based on a connection relationship, information exchange during execution of the intelligent collaboration task. For example, the intelligent collaboration task may be segmentation learning. A neural network model is divided into a plurality of sub-models. Each collaboration node in the collaboration node set is responsible for training one sub-model. During forward inference, one collaboration node inputs local data into the sub-model to complete inference, and outputs an inference result to one or more collaboration nodes in which a lower-layer sub-model is located. By analogy, one iteration of model training is completed, and then reverse gradient transfer is performed after the inference is completed. However, this application is not limited thereto. A de-centralized intelligent collaboration task may alternatively be an intelligent inference task or another model training task in which no central node exists.

The description information may further include a connection relationship between topology structures.

In an example, the topology structure is the point-to-point topology structure or de-centralized topology structure type. The description information may include an identifier of an upstream node of the second node and/or an identifier of a downstream node of the second node. The upstream node is a node that sends interaction information to the second node when executing the first intelligent collaboration task in collaboration. The downstream node is a node that receives the interaction information from the second node when executing the first intelligent collaboration task. The second node may determine a connection relationship between the second node and another node in the topology structure based on the identifier of the upstream node and the identifier of the downstream node that are indicated by the description information. There may be one or more upstream nodes of the second node and one or more downstream nodes of the second node.

In another example, the topology structure is the centralized topology structure type. The description information may include an identifier of the central node, and the second node determines the central node based on the identifier, and exchanges information with the central node when executing the first intelligent collaboration task.

### 2. Type of an interaction parameter between nodes in the collaboration node set

For example, the interaction parameter may include one or more types of the following interaction parameters:
a model parameter, a gradient, an environment state (state) parameter, an action execution (action) parameter, an action execution policy (policy) parameter, a reward (reward) parameter, a knowledge extraction representation parameter, or a correlation between node tasks.

For example, the first intelligent collaboration task is a model training task, and the model training task is to solve the model parameter by using a loss function and a gradient descent algorithm. In this case, the interaction parameter that may be indicated by the first node by using the description information of the first intelligent collaboration task includes the gradient and/or the model parameter. For example, a federated learning or transfer learning manner may be used for the model training task.

For another example, the first intelligent collaboration task is a model training task for which a reinforcement learning manner is used, and the interaction parameter indicated by the description information may be one or more of an environment state parameter, an action execution parameter, an action execution policy parameter, or a reward parameter in reinforcement learning.

The interaction parameter indicated by the description information may be a correlation between tasks respectively undertaken by the nodes in the first intelligent collaboration task. For example, the correlation may be used as a constraint term of the loss function. In other words, the tasks respectively undertaken by the nodes may have a specific correlation, to implement mutual learning between differentiated tasks.

The interaction parameter indicated by the description information may be the knowledge extraction representation parameter, that is, an abstract representation parameter obtained by extracting a parameter (for example, the model parameter and the gradient) obtained from the model training task. The interaction parameter has a smaller information amount than an original parameter, so that overheads of the interaction information can be reduced, and communication efficiency can be improved.

### 3. Format of an interaction parameter

The format of the interaction parameter may include but is not limited to precision of the interaction parameter, a quantity of bits occupied by the interaction parameter in the interaction information, and/or the like.

### 4. Interaction manner of an interaction parameter

The interaction manner may be that one-time interaction or periodic interaction is used for the interaction parameter. For example, if the interaction manner of the interaction parameter indicated by the description information is one-time interaction, and the interaction manner indicated by the second node based on the description information is one-time interaction, the second node outputs interaction information once after executing a task undertaken by the second node, where the interaction information includes the interaction parameter. Alternatively, the interaction manner of the interaction parameter that may be indicated by the description information may be periodic. Optionally, the description information may further include an interaction periodicity length, and the periodicity length may be represented by a quantity of times. For example, the second node undertakes a model training task in the first intelligent collaboration task, the description information may indicate a quantity N of iterations, and the second node may determine to send interaction information once at an interval of N iterations in a model training process, where the interaction information includes the interaction parameter. Alternatively, the periodicity length may be represented by time duration, the description information may indicate that the periodicity length is duration T, and the second node sends interaction information once at an interval of duration T. However, this application is not limited thereto.

### 5. Whether an interaction parameter is synchronously sent between nodes in the collaboration node set

The description information may indicate a synchronization mechanism, for example, a synchronous manner, an asynchronous manner, or a hybrid manner, for sending the interaction parameter by the collaboration node in the collaboration node set in the first intelligent collaboration task. For example, if the first intelligent collaboration task is centralized federated learning, and the description information may indicate that the interaction parameter is sent in the synchronous manner, a plurality of participating nodes need to synchronously send the interaction parameter to the central node. The description information may indicate an occasion at which the participating node sends the interaction parameter, so that the plurality of participating nodes synchronously send the interaction parameter. Alternatively, when the plurality of participating nodes determine, based on the description information, that a sending manner of the interaction parameter is the synchronous manner, the plurality of participating nodes may negotiate a synchronization occasion through information exchange. This is not limited in this application. For another example, the description information may indicate that the asynchronous manner or the hybrid manner is used, and the description information may further indicate duration of a timer. The timer is used by the central node to determine duration of receiving the interaction parameter, to reduce cases in which the first intelligent collaboration task is suspended because the interaction parameter is not received for long time. Alternatively, the description information may not indicate duration of a timer, and the duration of the timer may be predefined.

### 6. Model used by the first intelligent collaboration task

For example, the description information may indicate a model type used by the first intelligent collaboration task. For example, the model type includes a nearest neighbor model, a decision tree model, a Bayesian model, a linear model, or a multi-layer neural network model. Optionally, the description information may further include a model parameter of the model, and the second node may determine, based on the description information, the model used to execute the first intelligent collaboration task. For example, the first intelligent collaboration task is a model training task, and the model may be an initial model for model training. For another example, the first intelligent collaboration task is an inference task, and the model is a model used to execute the inference task.

For another example, a plurality of models and an identifier corresponding to each model may be predefined. The description information may include an identifier of the one or more models. After receiving the description information, the second node executes the first intelligent collaboration task by using a model corresponding to the identifier.

### 7. Model training manner of the first intelligent collaboration task

For example, the first intelligent collaboration task is a model training task, and the description information may indicate a model training manner used by the first intelligent collaboration task. For example, the description information may indicate model training manners such as supervised learning, unsupervised learning, or reinforcement learning. The second node executes the model training task in the model training manner indicated by the description information.

In an implementation, a plurality of intelligent collaboration tasks and corresponding identifiers may be predefined. The description information of the first intelligent collaboration task may indicate one or more configuration parameters of the first intelligent collaboration task in 1 to 7 above in a manner of indicating a predefined identifier of the first intelligent collaboration task.

For example, N types of intelligent collaboration tasks shown in Table 1 may be predefined. Identifiers of the N types of intelligent collaboration tasks are respectively 1 to N, and a topology structure, a type and a format of an interaction parameter, a synchronization mechanism, an interaction manner, and a model training manner of each type of intelligent collaboration task are defined. The description information of the first intelligent collaboration task in the first message may include an identifier of the first intelligent collaboration task. The second node may determine, based on the identifier in the description information, to execute the first intelligent collaboration task corresponding to the identifier in Table 1. It should be noted that Table 1 is an example provided for better understanding of the solutions in this application. This application is not limited thereto. In a specific implementation, an intelligent collaboration task may be predefined based on a specific implementation requirement. In addition, in the example of Table 1, each of the foregoing configuration parameters 1 to 7 of the intelligent collaboration task is defined. In a specific implementation, some of the foregoing configuration parameters 1 to 7 of the intelligent collaboration task may alternatively be predefined. In an implementation, some of the foregoing configuration parameters 1 to 7 of the intelligent collaboration task may be predefined, and the other configuration parameters may be indicated by using the description information of the intelligent collaboration task. This is not limited in this application.

**Table 1**

| Identifier of an intelligent collaboration task | 1 | 2 | ... | N |
|---|---|---|---|---|
| Topology structure | Point-to-point | Centralized | ... | De-centralized |
| Type of an interaction parameter | Environment state parameter, action execution parameter, action execution policy parameter, and reward parameter | Model parameter and gradient | ... | Knowledge extraction representation parameter |
| Format of the interaction parameter | Precision 1 and quantity 1 of bits | Precision 2 and quantity 2 of bits | ... | Precision N and quantity N of bits |
| Interaction manner | One-time | Periodic | ... | Periodic |
| Interaction synchronization mechanism | Asynchronous | Synchronous | ... | Hybrid |
| Model training manner | Reinforcement learning | Federated learning | ... | Federated learning |

According to the foregoing solution, the description information of the first intelligent collaboration task may be used to configure the collaboration nodes to complete the first intelligent collaboration task in collaboration with each other, so that a problem that performance of a model obtained through training does not meet a requirement due to insufficient diversity of data samples of a single node and other problems can be reduced. In addition, the description information of the intelligent collaboration task is defined, so that the first node and the nodes in the collaboration node set can reach a consensus on content indicated by the description information. In this way, the first node flexibly configures different types of intelligent collaboration tasks for the nodes based on a task requirement.

The first message sent by the first node to the second node may further include the time information for executing the first intelligent collaboration task by the second node. For example, the first node may determine, based on a network load state and necessity and urgency of the first intelligent collaboration task, time for executing the first intelligent collaboration task by the collaboration node set, and notify the second node by using the first message.

The node in the collaboration node set may send, to the first node, a message indicating a load state of a node, so that the first node learns of a load state of the collaboration node set. For example, the second node sends, to the first node, a third message indicating a load state of the second node. The first node may determine, based on a load state fed back by the node, time for executing the first intelligent collaboration task by the collaboration node set.

The load state may be determined based on one or more of the following parameters:
a percentage P₁ of input communication traffic of the collaboration task of the node in total input traffic;
a percentage P₂ of output communication traffic of the collaboration task of the node in total output traffic;
a percentage P₃ of computing power overheads of the node for executing the collaboration task in total computing power overheads; or
a percentage P₄ of communication traffic transmission duration of the collaboration task of the node in total session data congestion duration in a case of session data congestion.

The third message may include one or more of the foregoing parameters, so that the first node can determine the load state of the second node. For example, the third message may include P₁. The second node may determine P₁ based on input communication traffic of a task of a collaboration type currently being executed at a communication ingress and total input communication traffic at the communication ingress (including but not limited to input communication traffic of a task of a collaboration type, input communication traffic of a task of a non-collaboration type, input communication traffic of service communication, and the like), and notify the first node by using the third message. The first node can measure, based on the percentage P₁ of the input traffic of the collaboration task of the node, traffic of the collaboration task obtained by the node. If the input traffic of the collaboration task is excessive, a processing bottleneck of the node may be caused. For example, the third message may include P₂, and the second node determines a percentage of output communication traffic of a task of a collaboration type at a communication egress, and notifies the first node by using the third message. The first node can measure, based on the percentage P₂ of the output traffic of the collaboration task of the node, the output traffic of the collaboration task of the node. If the output traffic of the collaboration task is excessive, a collaboration traffic storm in a network may be caused.

For example, the input traffic at the communication ingress may be interface traffic of a receiver of a node, interface traffic of an input interface of a processor, or input traffic of another interface. The input traffic at the communication egress may be interface traffic of a transmitter of a node, interface traffic of an output interface of a processor, or output traffic of another interface. This is not limited in this application.

In addition, the third message may include P₃ and/or P₄, and P₃ and/or P₄ are/is notified to the first node by using the third message after being determined by the second node. The first node can measure, based on the percentage P₃ of collaboration computing power, overheads of node computing power consumed by the collaboration information, which may be used as a dimension for evaluating collaboration gains. In addition, the first node can measure, based on the percentage P₄ of the communication traffic transmission duration of the collaboration task in the case of session congestion, impact of the collaboration traffic of the node on congestion in the case of session congestion.

The first node may determine, based on the load state of the node in the collaboration node set and communication traffic and processing overheads of the to-be-configured first intelligent collaboration task, whether each node currently has a spare capability to execute the to-be-configured intelligent collaboration task, and impact of executing the first intelligent collaboration task by each node on a communication service. When impact of executing the first intelligent collaboration task by the collaboration node set on service communication of the node is small (for example, one or more of the parameters for determining the load state are less than a corresponding threshold), it is determined that the collaboration node set is configured to execute the first intelligent collaboration task, that is, the time for executing the first intelligent collaboration task by the collaboration node set is determined. This can reduce impact on service communication caused by executing an intelligent collaboration task by a node, and reduce cases in which data congestion is caused by executing the intelligent collaboration task by the node.

According to the foregoing descriptions, the first node may determine one or more of the collaboration node set of the first intelligent collaboration task, the collaboration manner of the collaboration node set, the interaction information between the collaboration nodes, and the time for executing the first intelligent collaboration task. In addition, the first node may configure the first intelligent collaboration task for the collaboration node set by using the configuration message. After obtaining the configuration message, the node in the collaboration node set may execute the first intelligent collaboration task based on the configuration message. For example, the second node performs S203.

S203: The second node executes the first intelligent collaboration task based on the first message.

After receiving the first message in S202, the second node collaborates with the node in the collaboration node set to execute the first intelligent collaboration task.

In an implementation, the first node determines, based on the load state of the node in the collaboration node set, to stop the first intelligent collaboration task. Optionally, the first node may send a second message to the node in the collaboration node set, where the second message indicates to stop the first intelligent collaboration task.

In an example, after the collaboration node set starts to execute the first intelligent collaboration task, the first node may determine, based on the load state of the collaboration node set, whether execution of the first intelligent collaboration task by the node affects service communication. When impact of execution of the first intelligent collaboration task by the collaboration node set on service communication of the node is large (for example, one or more of the foregoing parameters for determining the load state are greater than a corresponding threshold), the first node may notify, by using the second message, the node in the collaboration node set to stop the first intelligent collaboration task. The stopping may be suspending the first intelligent collaboration task. When determining that impact on service communication is small, the first node may indicate the collaboration node set to continue executing the first intelligent collaboration task. Alternatively, the stopping may be terminating (that is, ending). For example, when determining, based on the load state, that the first intelligent collaboration task severely affects service communication, the first node may notify the collaboration node set to terminate the first intelligent collaboration task, so that an intelligent collaboration node can release a resource occupied by the first intelligent collaboration task. In this way, a communication service of the node can meet a service requirement.

The node in the collaboration node set may periodically send the load state of the node to the first node, or the first node may request, by using a message, the node in the collaboration node set to send the load state of the node, so that the first node can monitor the network state and evaluate impact of the intelligent collaboration task on service communication. In this way, the first node can optimize the network state, to reduce cases in which network congestion and impact on a communication service are caused by the intelligent collaboration task.

In another example, the node in the collaboration node set may feed back a collaboration state of the first intelligent collaboration task to the first node, for example, including the parameter (for example, a model parameter or a gradient) obtained from the first intelligent collaboration task. The first node determines a completion degree of the first intelligent collaboration task based on the collaboration state. When the completion degree meets a requirement, the second message notifies the second node that the intelligent collaboration task is completed, and the first intelligent collaboration task is stopped. Alternatively, the collaboration node may determine, based on the parameter obtained from the executed first intelligent collaboration task, whether collaboration is completed. In this case, the first node may not send the second message to the collaboration node, and the collaboration node stops the first intelligent collaboration task after determining that the first intelligent collaboration task is completed.

In an implementation, after completing the first intelligent collaboration task, the second node may perform communication by using an intelligent model obtained by using the first intelligent collaboration task.

The second node may communicate with another node in the collaboration node set by using the intelligent model. For example, the first intelligent collaboration task is that the second node and another collaboration node in the collaboration node set complete a model training task of a self-encoder model in collaboration. In the collaboration node set, model training of an encoding model and a decoding model is completed in collaboration, and after the training is completed, an obtained model is used for encoding and decoding of a signal between collaboration node sets. However, this application is not limited thereto.

In another implementation, after completing the first intelligent collaboration task, the second node sends a model parameter of an intelligent model, where the intelligent model is an intelligent model obtained by executing the first intelligent collaboration task.

The second node may assist another node in completing model training, and after the model training, the second node sends, to the another collaboration node, a model parameter of an intelligent model obtained through the training, so that the collaboration node can apply the model in communication.

In still another implementation, after completing the first intelligent collaboration task, the second node not only performs communication by using the intelligent model obtained by executing the first intelligent collaboration task, but also sends the model parameter of the intelligent model to another node.

The second node may apply the intelligent model obtained by executing the first intelligent collaboration task to communication, so that communication reliability and efficiency can be improved. The second node further sends the model parameter of the intelligent model to another node, so that the another node may apply the intelligent model to communication, or may obtain, based on the intelligent model and a local sample, an intelligent model suitable for the node and apply the intelligent model to communication, to implement model sharing and improve resource utilization.

For example, the collaboration node set may include but is not limited to one or more nodes of a terminal, an access network node, or a core network node. In the foregoing solution, heterarchical intelligent collaboration (heterarchical intelligent collaboration, HIC) between nodes can be implemented. The first node may be an access network node or a core network node, or the access network node or the core network node may have a function of the first node. This application is not limited thereto. The first node may alternatively be a network node other than an access network node and a core network node.

According to the foregoing solution provided in this application, a plurality of nodes in a network configured by the first node as required can execute different types of intelligent collaboration tasks in collaboration. The nodes complete the intelligent collaboration task in collaboration with each other, so that a problem that performance of a model obtained through training does not meet a requirement due to insufficient diversity of data samples of a single node and other problems can be reduced, and efficiency of executing an intelligent task by the node and resource utilization can be improved. In this way, communication efficiency of an artificial intelligence application in communication is improved.

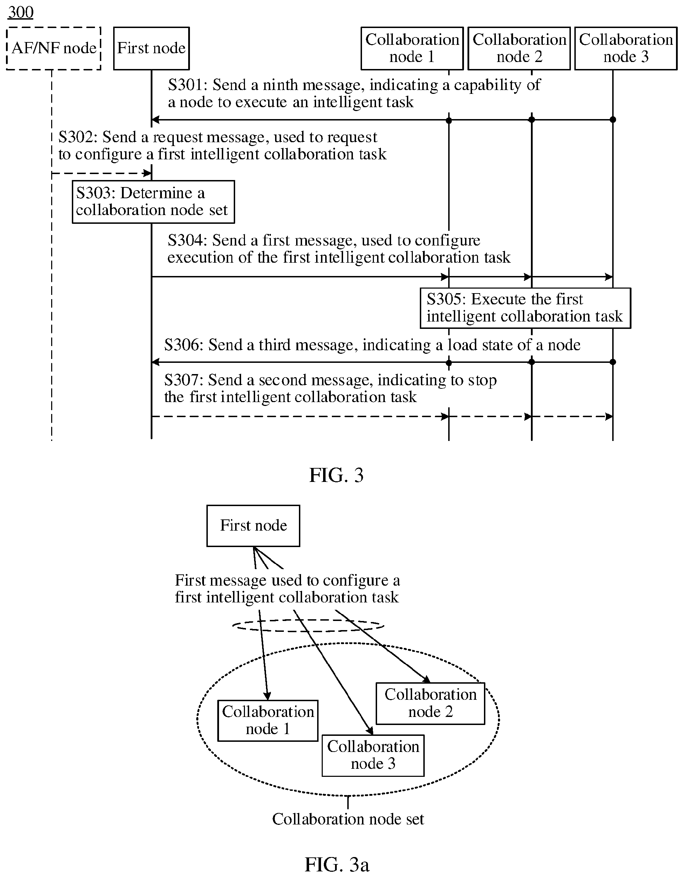

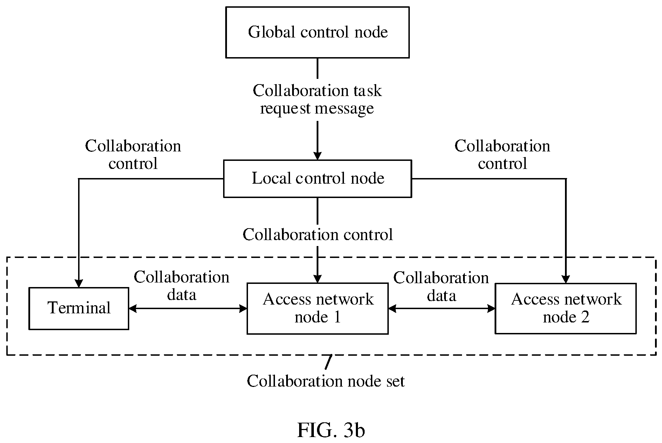

As described above, the first node may not participate in execution of the first intelligent collaboration task, and is used as an organization and management node of the first intelligent collaboration task to configure the first intelligent collaboration task. The first node may have one or more of the foregoing intelligent collaboration task configuration function, the foregoing intelligent collaboration task optimization function, or an intelligent collaboration task management function. The intelligent collaboration task management function is used for one or more of registration, creation, allocation, update, or deletion of the intelligent collaboration task. The first node may be referred to as a control node or a management node. For example, FIG. 3 is a schematic flowchart of a communication method 300 according to an embodiment of this application. Collaboration nodes (for example, a collaboration node 1, a collaboration node 2, and a collaboration node 3) shown in FIG. 3 are collaboration nodes in a collaboration node set for executing a first intelligent collaboration task, and have functions of the second node described above. For example, the collaboration node 1, the collaboration node 2, and the collaboration node 3 are respectively a terminal, an access network node, and a core network node. However, this application is not limited thereto. At least two or all of the three collaboration nodes may alternatively be nodes of a same type.

A collaboration manner of an intelligent collaboration task shown in FIG. 3 may be referred to as a hierarchical organization manner. An architecture of the hierarchical organization manner may be shown in FIG. 3a. A first node collaborates to organize, configure, and manage nodes (such as a collaboration node 1, a collaboration node 2, and a collaboration node 3) having intelligent collaboration capabilities to execute the intelligent collaboration task in collaboration. It should be noted that, for a part in the embodiment shown in FIG. 3 that is the same as that in the embodiment shown in FIG. 2, refer to the descriptions in the embodiment shown in FIG. 2. Details are not described herein again. The method 300 includes but is not limited to the following steps.

S301: The collaboration node sends an eighth message to the first node, where the eighth message indicates a capability of a node to execute the intelligent task.

In an implementation, a node having the capability to execute the intelligent task may register with the first node, that is, send the eighth message to the first node, and notify, by using the eighth message, the first node of the capability of the node to execute the intelligent task, so that the first node can configure the intelligent task for the node based on the node capability.

In another implementation, before S301, the first node may send a query message (that is, an example of a ninth message) to the node. The query message is used to query the capability of the node to execute the intelligent task. After receiving the query message, the node sends the eighth message to the first node.

Optionally, in S302, the first node receives a request message, where the request message is used to request to configure the first intelligent collaboration task.

For example, an AF node or a network function (network function, NF) node shown in FIG. 3 may send the request message to the first node based on a requirement, to request the first node to configure the first intelligent collaboration task.

For another example, an upper-layer control node of the first node may send a request message to the first node, to request the first node to configure the first intelligent collaboration task. If the control node uses a multi-layer deployment manner, the first node shown in FIG. 3 may be used as a lower-layer control node to manage a collaboration task of a node set in a range in which the first node is located, and the upper-layer control node of the first node may manage a collaboration task between a plurality of node sets by controlling the lower-layer control node. The first node may be referred to as a local control node, and the upper-layer control node of the first node may be referred to as a global control node. For example, the multi-layer deployment manner may be shown in FIG. 3b. After receiving a collaboration task request message from a global control node, a local control node determines a collaboration node set based on the task request message. For example, the collaboration node set includes a terminal, an access network node 1, and an access network node 2 that are managed by the local control node. In addition, the local collaboration node configures, through collaboration control, the collaboration node to execute the first intelligent collaboration task, and nodes in the collaboration node set execute the first intelligent collaboration task, and exchange collaboration data in a task execution process. For example, the local control node may be an access network node, and the global control node may be a core network node. Alternatively, the local control node may be a micro base station, and the global control node may be a macro base station. Alternatively, the local control node and the global control node may be different core network nodes. This is not limited in this application.

In the foregoing two examples, the request message may include the description information of the first intelligent collaboration task described above. After receiving the request message, the first node may determine the collaboration node set in S303 based on the description information of the first intelligent collaboration task, and forward the description information of the first intelligent collaboration task by using a first message in S304. Alternatively, the request message may include a task requirement of the first intelligent collaboration task. The first node determines the first intelligent collaboration task based on the task requirement, and a first message in S304 includes the description information of the first intelligent collaboration task.

For another example, the collaboration node shown in FIG. 3 may send the request message to the first node based on a communication requirement of the node. The request message may include the communication requirement of the node and/or the task requirement of the first intelligent collaboration task. The first node configures, based on the request message, the collaboration node set and the first intelligent collaboration task for the collaboration node.

For another example, the first node may initiate and configure the first intelligent collaboration task based on a network state. This is not limited in this application.

S303: The first node determines the collaboration node set.

For example, the collaboration node set includes the collaboration node 1, the collaboration node 2, and the collaboration node 3.

S304: The first node sends the first message to the collaboration node set, where the first message is used to configure execution of the first intelligent collaboration task.

Correspondingly, the node in the collaboration node set receives the first message from the first node.

S305: The collaboration node executes the first intelligent collaboration task based on the first message.

In an implementation, the first message includes the description information of the first intelligent collaboration task, and after configuring, based on the description information of the first intelligent collaboration task, to execute the first intelligent collaboration task, the collaboration node sends a response message to the first node, where the response message is used to notify the first node, to complete a related configuration for executing the first intelligent collaboration task. After receiving the response message, the first node determines, based on the network state (for example, a load state of a collaboration node), time for executing the first intelligent collaboration task by the collaboration node set, and the first node sends a trigger message to the collaboration node set, to trigger the collaboration node set to execute the first intelligent collaboration task. The trigger message includes an identifier of the first intelligent collaboration task configured by the first message, and the collaboration node may determine, based on the identifier, to start to execute the first intelligent collaboration task corresponding to the identifier.

In another implementation, the first message includes the description information of the first intelligent collaboration task and time information for executing the first intelligent collaboration task by the collaboration node set. After configuring, based on the description information of the first intelligent collaboration task, to execute the first intelligent collaboration task, the collaboration node starts to execute the first intelligent collaboration task at the time indicated by the time information.

S306: The collaboration node sends a third message to the first node, where the third message indicates a load state of a node.

When executing the first intelligent collaboration task, the collaboration node in the collaboration node set may send the third message to the first node. In this way, the first node may monitor collaboration performance of the collaboration node based on the third message, so that the first intelligent collaboration task can be adjusted in time.

Optionally, in S307, the first node sends a second message to the collaboration node, where the second message indicates to stop the first intelligent collaboration task.

As described above, the second message may notify the collaboration node to suspend execution of the first intelligent collaboration task or terminate the first intelligent collaboration task. Alternatively, the collaboration node is notified that the first intelligent collaboration task is completed and the first intelligent collaboration task is stopped. Alternatively, the first node may not send the second message to the collaboration node, and the collaboration node stops the first intelligent collaboration task after determining that the first intelligent collaboration task is completed.

In the hierarchical organization manner of the intelligent collaboration task shown in FIG. 3, the first node performs collaboration organization, configuration, management, and the like. This can reduce negotiation complexity between collaboration nodes and improve collaboration efficiency, and is applicable to a scenario in which a large quantity of collaboration nodes participate in the intelligent collaboration task.

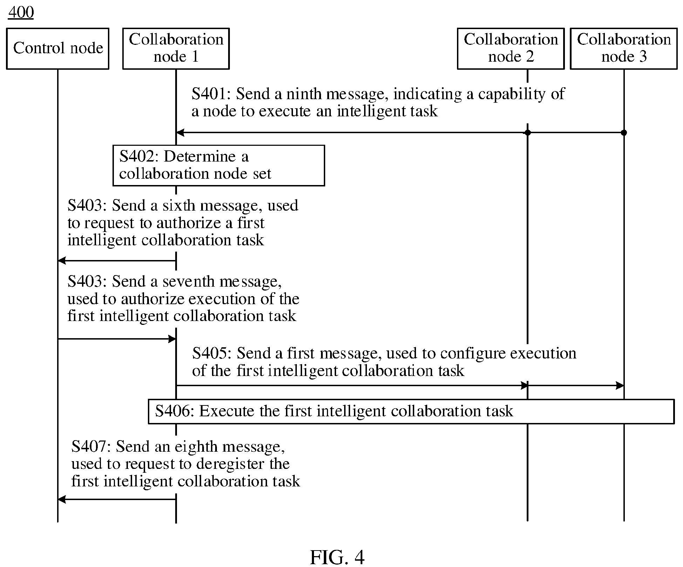

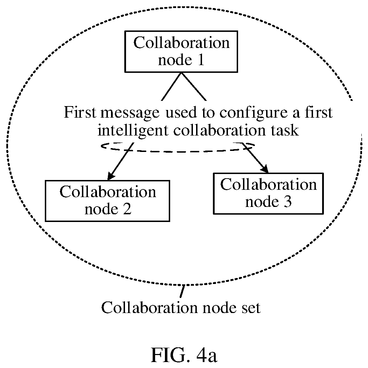

The collaboration node participating in the intelligent collaboration task may also have a capability to organize intelligent collaboration, and can execute the intelligent collaboration task in a small range through negotiation. A collaboration manner of the intelligent collaboration task may be referred to as a self-organization manner. For example, FIG. 4 is a schematic flowchart of a communication method 400 according to an embodiment of this application. Collaboration nodes shown in FIG. 4 are collaboration nodes in a collaboration node set for executing a first intelligent collaboration task, and have functions of the second node described above. A collaboration node 1 may further have an intelligent collaboration task configuration function and/or an intelligent collaboration task optimization function of the first node. For example, FIG. 4a is a diagram of an architecture of a self-organization manner. A collaboration node 1 organizes, by configuring a first message of a first collaboration task, a collaboration node 2 and a collaboration node 3, to collaborate with the collaboration node 1 to execute a first intelligent task. The method 400 includes but is not limited to the following steps.

S401: The collaboration node 1 receives eighth messages from a plurality of nodes, where the eighth message indicates a capability of a node to execute the intelligent task.

The plurality of nodes are nodes having the capability to execute the intelligent task. For example, the nodes having the capability to execute the intelligent task may exchange respective capabilities to execute the intelligent task. Alternatively, a node (for example, the collaboration node 1) having an intelligent collaboration task configuration function may send a query message to the plurality of nodes. For example, the plurality of nodes are adjacent nodes of the first node, and the first node queries, by using the query message, a capability of the adjacent node to execute the intelligent collaboration task. After receiving the query message, the plurality of nodes send the eighth messages to the collaboration node 1, to notify the node of the capability to execute the intelligent collaboration task.

S402: The collaboration node 1 determines the collaboration node set based on the eighth message.

The collaboration node set includes the collaboration node 1, the collaboration node 2, and the collaboration node 3. After determining the first intelligent collaboration task that needs to be completed by the collaboration node set in collaboration, the collaboration node 1 performs S403.

In an example, the collaboration node 1 may determine one or more of the following configuration parameters of the first intelligent collaboration task based on a requirement and an algorithm:
a topology structure between nodes in the collaboration node set, a type of an interaction parameter between nodes in the collaboration node set, a format of an interaction parameter, an interaction manner of an interaction parameter, whether an interaction parameter is synchronously sent between nodes in the collaboration node set, a model used by the first intelligent collaboration task, or a model training manner of the first intelligent collaboration task.

In another example, the collaboration node 1 may determine the first intelligent collaboration task from a plurality of predefined intelligent collaboration tasks.

S403: The collaboration node 1 sends a fifth message to a control node, where the fifth message is used to request to authorize the first intelligent collaboration task.

The fifth message may include one or more of the following information:
information about a node in the collaboration node set, description information of the first intelligent collaboration task, or time information for executing the first intelligent collaboration task.

S404: The control node sends a sixth message to the collaboration node 1, where the sixth message is used to authorize execution of the first intelligent collaboration task.

For example, after receiving the fifth message, the control node determines, based on a network state, that the first intelligent collaboration task requested by the collaboration node 1 by using the fifth message may be authorized. In this case, the control node may allocate an identifier to the first intelligent collaboration task, and notify, by using the sixth message, the collaboration node 1 that the first intelligent collaboration task requested by the collaboration node 1 is authorized and the collaboration node 1 of the identifier of the first intelligent collaboration task.

S405: The collaboration node 1 sends a first message, where the first message is used to configure the first intelligent collaboration task.

S406: The collaboration node set executes the first intelligent collaboration task.

In an optional implementation, the collaboration node 1 has an intelligent collaboration task optimization function, the collaboration node 2 and the collaboration node 3 may send a third message to the collaboration node 1, to notify the collaboration node 1 of a load state of a node when the first intelligent collaboration task is executed, and the collaboration node 1 may perform, based on the load state of the node, configuration optimization of the first intelligent collaboration task or indicate to stop execution of the first intelligent collaboration task.

In another optional implementation, the collaboration node in the collaboration node set may send the third message to the control node in a process of executing the first intelligent collaboration task. In this way, the control node monitors the first intelligent collaboration task and collaboration performance of the collaboration node, so that the first intelligent collaboration task can be adjusted in time.

S407: The collaboration node 1 sends a seventh message to the control node, where the seventh message is used to deregister the first intelligent collaboration task.

After completing the first intelligent collaboration task in collaboration, the collaboration node set sends the seventh message to the control node, to deregister the first intelligent collaboration task, where the seventh message includes the identifier of the first intelligent collaboration task. After receiving the seventh message, the control node may cancel management of the first intelligent collaboration task.

It should be noted that some nodes participating in executing the intelligent collaboration task may have an intelligent collaboration task configuration function and/or an intelligent collaboration task optimization function, and some nodes participating in execution of the intelligent collaboration task may not have an intelligent collaboration task configuration function or an intelligent collaboration task optimization function. In the embodiment shown in FIG. 4, the collaboration node 2 and the collaboration node 3 do not have an intelligent collaboration task configuration function or an intelligent collaboration task optimization function, and can only participate in execution of the intelligent collaboration task based on a configuration. Alternatively, each node that can participate in the intelligent collaboration task can have the intelligent collaboration task configuration function and/or the intelligent collaboration task optimization function of the collaboration node 1 in the method 400. In the embodiment shown in FIG. 4, the collaboration node 2 and the collaboration node 3 may alternatively have an intelligent collaboration task configuration function and an intelligent collaboration task optimization function, and can organize the intelligent collaboration task. This is not limited in this application.

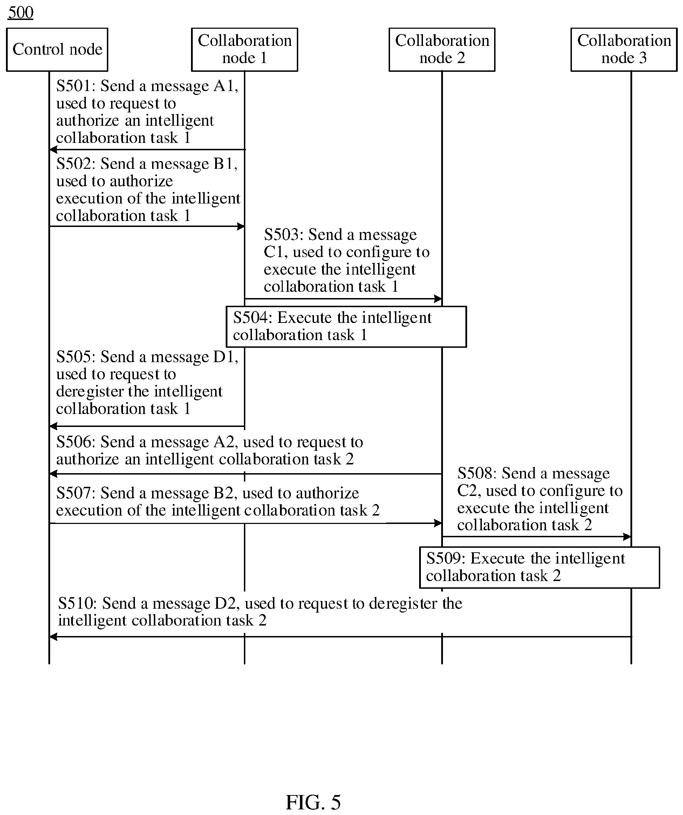

FIG. 5 is a schematic flowchart of a communication method 500 according to an embodiment of this application. In the method 500, both a collaboration node 1 and a collaboration node 2 have an intelligent collaboration task configuration function. For a part in the method 500 that is the same as that in the foregoing embodiment, refer to the foregoing descriptions. For brevity, details are not described herein again.

The collaboration node 1 may determine a collaboration node set (including the collaboration node 1 and the collaboration node 2) and an intelligent collaboration task 1 that needs to be completed in collaboration. In S501, the collaboration node 1 sends, to a control node, a message A1 used to request to authorize the intelligent collaboration task 1, and in S502, determines, by using a message B1 received from the control node, that the intelligent collaboration task 1 is authorized. The collaboration node 1 sends a message C1 (that is, an example of a first message) to the collaboration node 2 in S503, and configures the collaboration node 2 to execute the intelligent collaboration task 1. The collaboration node 2 executes the intelligent collaboration task 1 with the collaboration node 1 based on the message C1. After the intelligent collaboration task 1 is completed, the collaboration node 1 performs S505 to send, to the control node, a message D1 used to deregister the intelligent collaboration task 1.

After completing the intelligent collaboration task 1 with the collaboration node, the collaboration node 2 may initiate an intelligent collaboration task 2 based on a result of the intelligent collaboration task 1. For example, if the intelligent collaboration task 1 is a model training task, the collaboration node 2 may execute the intelligent collaboration task 2 with a collaboration node 3 based on an intelligent model obtained by training the intelligent collaboration task 1. In this manner, model training does not need to be performed between the collaboration node 2 and the collaboration node 3 starting from an initial model, and only adaptive training adjustment needs to be performed based on an existing model and data samples of the collaboration node 3. This can improve resource utilization of the node and further improve communication efficiency. After the intelligent collaboration task is authorized between the collaboration node 2 and the control node by using a message A2 in S506 and a message B2 in S507, the collaboration node 2 sends a message C2 to the collaboration node 3 in S508 to configure the intelligent collaboration task 2. After the collaboration node 2 and the collaboration node 3 execute the intelligent collaboration task 2, an intelligent model adapted to communication between the collaboration node 2 and the collaboration node 3 may be obtained. In S510, the collaboration node 2 sends a message D2 to the control node to deregister the intelligent collaboration task 2.

According to the foregoing solution, a plurality of nodes in a network configured as required can execute different types of intelligent collaboration tasks in collaboration. The nodes complete the intelligent collaboration task in collaboration with each other, so that a problem that performance of a model obtained through training does not meet a requirement due to insufficient diversity of data samples of a single node and other problems can be reduced, and efficiency of executing an intelligent task by the node and resource utilization can be improved. In this way, communication efficiency of an artificial intelligence application in communication is improved.

As described above, the collaboration node set may include but is not limited to one or more nodes of a terminal, an access network node, or a core network node. Heterarchical intelligent collaboration (heterarchical intelligent collaboration, HIC) between nodes can be implemented. A node that has the intelligent collaboration task configuration function, the intelligent collaboration task optimization function, and the intelligent collaboration task management function that are of the first node may be referred to as an HIC control node (controller), and is denoted as an HIC C. A node that has the function of executing the intelligent collaboration task of the second node may be referred to as an HIC execution node (agent), and is denoted as an HIC A. Some or all of HIC As may further have the intelligent collaboration task configuration function and/or the intelligent collaboration task optimization function of the first node.

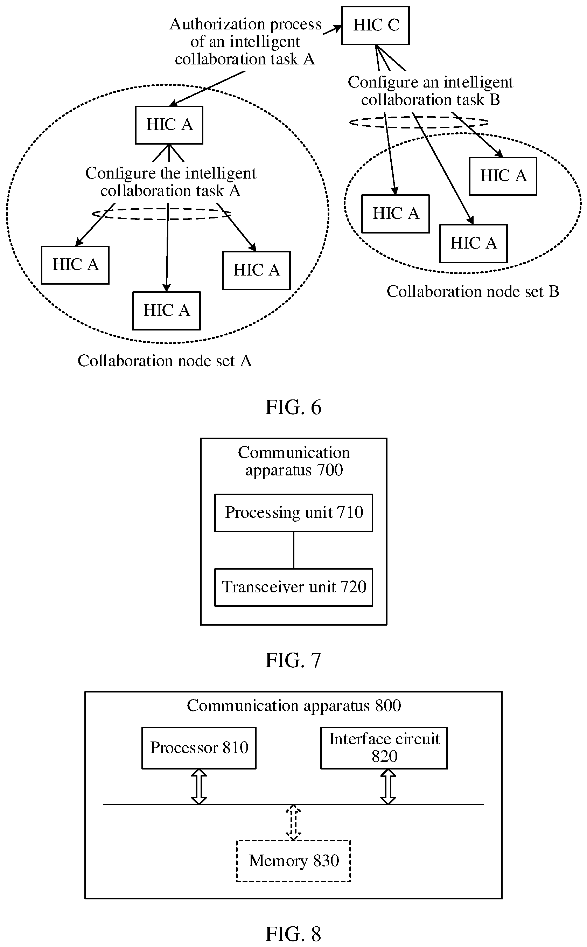

Nodes in a communication system may implement node collaboration to complete an intelligent collaboration task in the hierarchical organization manner shown in FIG. 3, FIG. 3a, and FIG. 3b through organization and configuration of the first node (that is, the HIC C), or may implement node collaboration to complete an intelligent collaboration task in the self-organization manner shown in FIG. 4 and FIG. 4a through organization and configuration of the HIC A having the intelligent collaboration task configuration function. This is suitable for collaboration of a small quantity of nodes. The collaboration is more efficient through self-negotiation. Alternatively, nodes in a communication system may implement node collaboration to complete an intelligent collaboration task in the hierarchical organization manner or the self-organization manner. This is suitable for collaboration of a large quantity of nodes, and negotiation complexity can be reduced. Planning and collaboration are performed via a same node, and collaboration between a plurality of nodes can be implemented more efficiently. As shown in FIG. 6, one HIC A in a collaboration node set A has an intelligent collaboration task configuration function. The HIC A may negotiate with another HIC A to determine the collaboration node set A and a to-be-executed intelligent collaboration task A. After being authorized by an HIC C based on a request to execute the intelligent collaboration task, the HIC A configures another HIC A in the collaboration node set and participates in execution of the intelligent collaboration task A in collaboration. For a specific procedure, refer to the descriptions in the embodiment shown in FIG. 4. Details are not described herein again. In addition, the HIC C may determine a collaboration node set B for executing an intelligent collaboration task B, and configure the intelligent collaboration task B for a node in the collaboration node set B, so that an HIC A in the collaboration node set B executes the intelligent collaboration task B in collaboration. For a specific procedure, refer to the descriptions in the embodiment shown in FIG. 3. Details are not described herein again.

It should be noted that, for a plurality of messages defined in embodiments of this application, for example, the first message to the ninth message, when there is no logical conflict, a same message may have functions of the plurality of messages. For example, the eighth message that is sent by the second node to the first node and that indicates the capability of the node to execute the intelligent task and the third message that indicates the load state of the node may be different messages or may be a same message. For example, a message sent by the second node to the first node not only indicates a capability of the second node to execute the intelligent task, but also indicates the load state of the second node. A manner of transferring a message between nodes is not limited in embodiments of this application. Different information included in one message may be sent by one node to a receiving node at one time, or different information in the message may be sent by the node to the receiving node at a plurality of times. For example, the first node may first send, to the second node, the identification information of the first intelligent collaboration task in the first message, and then send, to the second node, the description information of the first intelligent collaboration task. This is not limited in this application.

It may be understood that to implement functions in the foregoing embodiments, a base station and a terminal include corresponding hardware structures and/or software modules for performing the functions. A person skilled in the art should be easily aware that the units and the steps of the method in the examples described with reference to embodiments disclosed in this application may be implemented in a form of hardware or a combination of hardware and computer software in this application. Whether a function is performed by hardware or hardware driven by computer software depends on particular application scenarios and design constraint conditions of the technical solutions.

FIG. 7 and FIG. 8 are diagrams of possible structures of communication apparatuses according to embodiments of this application. These communication apparatuses may be configured to implement a function of the first node or the second node in the foregoing method embodiments, and therefore can also implement beneficial effects of the foregoing method embodiments. In this embodiment of this application, the communication apparatus may be one of the UE, the RAN node, or the core network node shown in FIG. 1, or may be a module (for example, a chip or a chip system) used in a communication device.

A communication apparatus 700 includes a transceiver unit 720, and the transceiver unit 720 may be configured to receive or send information. The communication apparatus 700 may further include a processing unit 710, and the processing unit 710 may be configured to process instructions or data, to implement a corresponding operation.

It should be understood that when the communication apparatus 700 is a chip disposed in (or used for) a communication device, the transceiver unit 720 in the communication apparatus 700 may be an input/output interface or a circuit of the chip, and the processing unit 710 in the communication apparatus 700 may be a processor in the chip.

Optionally, the communication apparatus 700 may further include a storage unit 730. The storage unit 730 may be configured to store instructions or data. The processing unit 710 may execute the instructions or the data stored in the storage unit, to enable the communication apparatus to implement a corresponding operation.

The communication apparatus 700 may be configured to implement functions of the first node in the method embodiment shown in FIG. 2 and FIG. 3 or the collaboration node 1 shown in FIG. 4 and FIG. 5. The communication apparatus 700 has the foregoing intelligent collaboration task configuration function and/or the foregoing intelligent collaboration task optimization function. When the communication apparatus 700 is configured to implement the functions of the first node in the method embodiments shown in FIG. 2 and FIG. 3, the communication apparatus 700 may further have an intelligent collaboration task management function.

When the communication apparatus 700 is configured to implement the functions of the first node in the method embodiments shown in FIG. 2 and FIG. 3 or the collaboration node 1 shown in FIG. 4 and FIG. 5, the processing unit 710 is configured to determine a collaboration node set for executing an intelligent collaboration task, where the collaboration node set includes a second node. The transceiver unit 720 is configured to send a first message to the second node, where the first message is used to configure the second node to execute the intelligent collaboration task.

The communication apparatus 700 may be configured to implement the functions of the first node in the method embodiment shown in FIG. 2 or the collaboration node shown in FIG. 3 and FIG. 4. The communication apparatus 700 has a function of executing the intelligent collaboration task.

When the communication apparatus 700 may be configured to implement functions of the second node in the method embodiment shown in FIG. 2 or the collaboration node shown in FIG. 3 to FIG. 5, the transceiver unit 720 is configured to receive a first message from a first node, where the first message is used to configure the second node to execute an intelligent collaboration task. The processing unit 710 is configured to execute the intelligent collaboration task based on the first message.

For more detailed descriptions of the processing unit 710 and the transceiver unit 720, refer to related descriptions in the method embodiments shown in FIG. 2 to FIG. 5.

It should be understood that the transceiver unit 720 in the communication apparatus 700 may be implemented through a communication interface (for example, a transceiver, a transceiver circuit, an input/output interface, or a pin), and when the communication interface is the transceiver, the transceiver may include a receiver and/or a transmitter. The processing unit 710 in the communication apparatus 700 may be implemented by using at least one processor, or the processing unit 710 in the communication apparatus 700 may be implemented by using at least one logic circuit. Optionally, the communication apparatus 700 further includes the storage unit, and the storage unit may be implemented by using a memory.

As shown in FIG. 8, a communication apparatus 800 includes a processor 810 and an interface circuit 820. The processor 810 and the interface circuit 820 are coupled to each other. It may be understood that the interface circuit 820 may be a transceiver or an input/output interface. Optionally, the communication apparatus 800 may further include a memory 830, configured to: store instructions executed by the processor 810, or store input data required by the processor 810 to run the instructions, or store data generated after the processor 810 runs the instructions.

When the communication apparatus 800 is configured to implement the method shown in FIG. 8, the processor 810 is configured to implement a function of the processing unit 810, and the interface circuit 820 is configured to implement a function of the transceiver unit 820.

When the communication apparatus is a chip used in a terminal device, the chip in the terminal device may implement functions of the first node or the second node in the foregoing method embodiments. The chip in the terminal device receives information from another module (for example, a radio frequency module or an antenna) in the terminal device, where the information is sent by a network device to the terminal device. Alternatively, the chip in the terminal device sends information to another module (for example, a radio frequency module or an antenna) in the terminal device, where the information is sent by the terminal device to a network device.

When the communication apparatus is a module used in a network device (for example, an access network device or a core network device), the module in the network device may implement functions of the first node or the second node in the foregoing method embodiments. The module in the network device receives information from another module (for example, a radio frequency module or an antenna) in the network device, where the information is sent by a terminal device to the network device. Alternatively, the module in the network device sends information to another module (for example, a radio frequency module or an antenna) in the network device, where the information is sent by the network device to a terminal device.

It may be understood that, the processor in this embodiment of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to the processor, to enable the processor to read information from the storage medium and write information into the storage medium. The storage medium may alternatively be a component of the processor. The processor and the storage medium may be disposed in the ASIC. In addition, the ASIC may be located in an access network device or a terminal device. The processor and the storage medium may alternatively exist as discrete components in the access network device or the terminal device.

All or some of the foregoing embodiments may be implemented by software, hardware, firmware, or any combination thereof. When the software is used to implement embodiments, all or some of embodiments may be implemented in a form of a computer program product. The computer program product includes one or more computer programs or instructions. When the computer programs or instructions are loaded and executed on a computer, all or some of the procedures or functions in embodiments of this application are performed. The computer may be a general-purpose computer, a special-purpose computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
determining, by a first node, a collaboration node set for executing an intelligent collaboration task, wherein the collaboration node set comprises a second node; and
sending, by the first node, a first message to the second node, wherein the first message is used to configure the second node to execute the intelligent collaboration task, and the first message comprises one or more of the following information:
information about a node in the collaboration node set;
identification information of the intelligent collaboration task;
description information of the intelligent collaboration task; or
time information for executing the intelligent collaboration task.

2. The method according to claim 1, wherein the description information of the intelligent collaboration task indicates one or more of the following:
a topology structure between nodes in the collaboration node set;
a type of an interaction parameter between nodes in the collaboration node set;
a format of the interaction parameter;
an interaction manner of the interaction parameter;
whether the interaction parameter is synchronously sent between nodes in the collaboration node set;
a model used by the intelligent collaboration task; or
a model training manner of the intelligent collaboration task.

3. The method according to claim 2, wherein the interaction parameter comprises one or more of the following:
a model parameter, a gradient, an environment state parameter, an action execution parameter, an action execution policy parameter, a reward parameter, a knowledge extraction representation parameter, or a correlation between node tasks.

4. The method according to any one of claims 1 to 3, wherein the method further comprises:
determining, by the first node based on a load state of a node in the collaboration node set, time for executing the intelligent collaboration task, wherein the time information indicates the time for executing the intelligent collaboration task.

5. The method according to any one of claims 1 to 4, wherein the method further comprises:
determining, by the first node based on the load state of the node in the collaboration node set, to stop the intelligent collaboration task; and
sending, by the first node, a second message to the node in the collaboration node set, wherein the second message indicates to stop the intelligent collaboration task.

6. The method according to claim 4 or 5, wherein the method further comprises:
receiving, by the first node, a third message from the second node, wherein the third message indicates a load state of the second node.

7. The method according to any one of claims 4 to 6, wherein the load state is determined based on one or more of the following parameters:
a percentage of input communication traffic of a collaboration task of a node in total input traffic;
a percentage of output communication traffic of a collaboration task of a node in total output traffic;
a percentage of computing power overheads of a node for executing a collaboration task in total computing power overheads; or
a percentage of communication traffic transmission duration of a collaboration task of a node in total session data congestion duration in a case of session data congestion.

8. The method according to any one of claims 1 to 7, wherein the method further comprises:
receiving, by the first node, a fourth message from a third node, wherein the fourth message is used to request to configure the intelligent collaboration task.

9. The method according to any one of claims 1 to 7, wherein the collaboration node set comprises the first node, and the method further comprises:
sending, by the first node, a fifth message to a fourth node, wherein the fifth message is used to request to authorize the intelligent collaboration task; and
receiving, by the first node, a sixth message from the fourth node, wherein the sixth message is used to authorize execution of the intelligent collaboration task.

10. The method according to claim 9, wherein the method further comprises:
sending, by the first node, a seventh message to the fourth node, wherein the seventh message is used to request to deregister the intelligent collaboration task.

11. The method according to any one of claims 1 to 10, wherein the determining, by a first node, a collaboration node set for executing an intelligent collaboration task comprises:
receiving, by the first node, eighth messages from a plurality of nodes, wherein the eighth message indicates a capability of a node to execute the intelligent collaboration task, and the plurality of nodes comprise the second node; and
determining, by the first node, the collaboration node set based on capabilities of the plurality of nodes to execute the intelligent task, wherein the collaboration node set comprises at least one of the plurality of nodes.

12. The method according to claim 11, wherein the eighth message comprises one or more of the following information:
description information of a current intelligent task, description information of a historical intelligent task, local model information, supported model training manner information, or information indicating whether model aggregation is supported.

13. The method according to claim 11 or 12, wherein the receiving, by the first node, eighth messages from a plurality of nodes comprises:
sending, by the first node, a ninth message to the second node, wherein the ninth message indicates the second node to report the capability to execute the intelligent task; and
receiving, by the first node, the eighth message from the second node.

14. A communication method, comprising:
receiving, by a second node, a first message from a first node, wherein the first message is used to configure the second node to execute an intelligent collaboration task, and the collaboration node set comprises the second node; and
executing, by the second node, the intelligent collaboration task based on the first message, wherein
the first message comprises one or more of the following information:
information about a node in the collaboration node set;
identification information of the intelligent collaboration task;
description information of the intelligent collaboration task; or
time information for executing the intelligent collaboration task.

15. The method according to claim 14, wherein the description information of the intelligent collaboration task indicates one or more of the following:
a topology structure between nodes in the collaboration node set;
a type of an interaction parameter between nodes in the collaboration node set;
a format of the interaction parameter;
an interaction manner of the interaction parameter;
whether the interaction parameter is synchronously sent between nodes in the collaboration node set;
a model used by the intelligent collaboration task; or
a model training manner of the intelligent collaboration task.

16. The method according to claim 15, wherein the interaction parameter comprises one or more of the following:
a model parameter, a gradient, an environment state parameter, an action execution parameter, a reward parameter, a knowledge extraction representation parameter, or a correlation between node tasks.

17. The method according to any one of claims 14 to 16, wherein the method further comprises:
receiving, by the second node, a second message from the first node, wherein the second message indicates to stop the intelligent collaboration task.

18. The method according to any one of claims 14 to 17, wherein the method further comprises:
sending, by the second node, a third message to the first node, wherein the third message indicates a load state of the second node.

19. The method according to claim 18, wherein the load state is determined based on one or more of the following parameters:
a percentage of input communication traffic of a collaboration task of a node in total input traffic;
a percentage of output communication traffic of a collaboration task of a node in total output traffic;
a percentage of computing power overheads of a node for executing a collaboration task in total computing power overheads; or
a percentage of duration in which a node transmits communication information of a collaboration task in total session data congestion duration in a case of session data congestion.

20. The method according to any one of claims 14 to 19, wherein the method further comprises:
sending, by the second node, an eighth message to the first node, wherein the eighth message indicates a capability of a node to execute the intelligent task.

21. The method according to claim 20, wherein the eighth message comprises one or more of the following information:
description information of a current intelligent task, description information of a historical intelligent task, local model information, supported model training manner information, or information indicating whether model aggregation is supported.

22. The method according to claim 20 or 21, wherein the sending, by the second node, an eighth message to the first node comprises:
receiving, by the second node, a ninth message sent by the first node, wherein the ninth message indicates the second node to report the capability to execute the intelligent task; and
sending, by the second node, the eighth message to the first node.

23. The method according to any one of claims 14 to 22, wherein the method further comprises:
communicating, by the second node, with the node in the collaboration node set by using an intelligent model; and/or
sending, by the second node, a model parameter of an intelligent model, wherein
the intelligent model is obtained by executing the intelligent collaboration task.

24. A communication apparatus, wherein the communication apparatus comprises a unit or a module configured to implement the method according to any one of claims 1 to 13.

25. A communication apparatus, wherein the communication apparatus comprises a unit or a module configured to implement the method according to any one of claims 14 to 23.

26. A communication apparatus, comprising at least one processor coupled to a memory, wherein
the memory is configured to store a program or instructions; and
the at least one processor is configured to execute the program or the instructions, to enable the apparatus to implement the method according to any one of claims 1 to 13, or implement the method according to any one of claims **14** to 23.

27. A computer-readable storage medium, comprising a computer program, wherein when the computer program is executed by one or more processors, an apparatus comprising the processor is enabled to implement the method according to any one of claims 1 to 13, or implement the method according to any one of claims **14** to 23.

28. A communication system, comprising the communication apparatus according to claim 24 and the communication apparatus according to claim 25.
